# EUROPÄISCHE PATENTSCHRIFT

(11) **EP 3 927 676 B1**
(45) Veröffentlichungstag und Bekanntmachung des Hinweises auf die Patenterteilung: **29.11.2023**
(21) Anmeldenummer: 20713161.6
(22) Anmeldetag: 17.02.2020
(51) Int. Cl.: C05F 1/00, C05F 1/02, C05F 17/10, C05F 17/60, C05F 17/993

(54) **VERFAHREN ZUR THERMISCHEN BEHANDLUNG TIERISCHER NEBENPRODUKTE**
METHOD FOR HEAT TREATING ANIMAL BYPRODUCTS
PROCÉDÉ DE TRAITEMENT THERMIQUE DE SOUS-PRODUITS D'ORIGINE ANIMALE

(30) Priorität: 19.02.2019 DE 102019104189
(43) Veröffentlichungstag der Anmeldung: 29.12.2021
(73) Patentinhaber: Binzer, Franz, 01920 Panschwitz-Kuckau (DE); Struve, Michael, 38300 Wolfenbüttel (DE)
(72) Erfinder: BINZER, Franz, 01920 Panschwitz-Kuckau (DE); HELBIG, Thomas, 01906 Burkau (DE); STRUVE, Michael, Wolfenbüttel/38300 (DE)
(74) Vertreter: Werner, André
(86) Internationale Anmeldenummer: PCT/DE2020/100106
(87) Internationale Veröffentlichungsnummer: WO 2020/169147

(56) Entgegenhaltungen:
- WO-A1-2012/126096
- WO-A1-2014/131398
- CN-A- 105 503 308
- DE-T2- 69 909 601

## Beschreibung

Die Erfindung betrifft ein Verfahren zur sterilisierenden thermischen Behandlung tierischer Nebenprodukte bei gleichzeitiger Gewinnung von Wertstoffen. Sie eignen sich insbesondere für die Verarbeitung der tierischen Nebenprodukten zu Biokraftstoffen und Düngemitteln im Rahmen der Schlachtung von Kühen, Schweinen, Ziegen, Schafen, Hühnern und sonstigen Nutzieren.

Tierische Nebenprodukte entstehen hauptsächlich während der Schlachtung von Tieren, die für den menschlichen Verzehr bestimmt sind, bei der Herstellung von Erzeugnissen tierischen Ursprungs wie Milcherzeugnissen, bei der Beseitigung toter Tiere und im Zuge der Seuchenbekämpfung. Unabhängig von ihrer Quelle stellen sie ein mögliches Risiko für die Gesundheit von Mensch und Tier sowie für die Umwelt dar. Dieses Risiko muss auf geeignete Weise begrenzt werden, und zwar dadurch, dass solche Produkte unter strengen Bedingungen, die die betreffenden Gesundheitsrisiken verringern, entweder sicher beseitigt oder für andere Zwecke verwendet werden.

Eine ganze Reihe tierischer Nebenprodukte oder Folgeprodukte kann im verarbeitenden Gewerbe oder für die Energieerzeugung verwendet werden. Zur Vermeidung bzw. Minimierung von Gesundheitsrisiken ist vor der Weiterverarbeitung sicherzustellen, dass eine geeignete Sterilisierung bzw. Hygienisierung der tierischen Nebenprodukte erfolgt.

DE 699 09 601 T2 beschreibt ein Verfahren zur biologischen Raffinierung von organischen Abfällen, demgemäß infektiöse organische Abfallstoffe, wie zum Beispiel tierische Nebenprodukte, in Verbindung mit einem zerkleinerten fasrigen organischen Material in einem Überdruckreaktor thermisch behandelt werden.

GB 2 386 903 A offenbart ebenfalls ein thermisches Verfahren zur Behandlung tierischer Nebenprodukte, wobei die thermische Behandlung im Wesentlichen im Temperaturbereich von 100 bis 150 °C durchgeführt wird. Ein in einem vergleichbaren Temperaturbereich mittels eines Bioreaktors durchgeführtes Verfahren zur anaeroben Verwertung von Tierkörperteilen beschreibt DE 196 28 521 A1.

WO 2012/126096 A1 offenbart ein System zur thermochemischen Behandlung von Biomasse, umfassend einen Vorratsbehälter für das Ausgangsmaterial, eine thermochemische Reaktionskammer mit einer Wärmequelle, einen Zuführer mit mindestens einer Schnecke, eine Trennkammer und eine Steuerung. Die Steuerung ist mit der Reaktionskammer und/oder Trennkammer gekoppelt. Das System kann zur Herstellung von energetischen Nutzprodukten wie Biokohle, Bioöl und Gasen aus nicht kondensierten Dämpfen verwendet werden.

WO 2014/131398 A1 beschreibt eine Vorrichtung und ein Verfahren zur thermischen Reststoffverwertung, wobei die Vorrichtung eine Reaktorkammer zum Aufnehmen von Ausgangsstoffen sowie eine Heizvorrichtung zum Beheizen der Reaktorkammer aufweist. Die in der Reaktorkammer aufgenommenen Ausgangsstoffe werden während des stufenweisen Beheizens unter Erzeugung gasförmiger Produkte zersetzt.

CN 105 503 308 A offenbart eine Kompostiervorrichtung sowie eine Steuerungsverfahren zum Betrieb der Kompostiervorrichtung, wobei die Kompostiervorrichtung eine innerhalb eines isolierenden Gehäuses angeordnete Kompostierkammer umfasst.

Bekannte Vorrichtungen zur Aufbereitung von tierischen oder auch pflanzlichen Abfällen offenbaren ferner KR 101841490 B1, WO 2014/202967 A2 und KR 1020160145403 A.

Für tierische Nebenprodukte, die gemäß Verordnung (EG) Nr. 1069/2009 in Kategorie 3 klassifiziert sind, sehen die Normen der Europäischen Union Standardverarbeitungsmethoden zur Sterilisierung der tierischen Nebenprodukte vor. Die Verarbeitungsmethode 2 gemäß Verordnung (EU) Nr. 142/2011 erfordert demnach eine Zerkleinerung der zu verarbeitenden tierischen Nebenprodukte auf eine Kantenlänge von höchstens 150 mm. Nach der Zerkleinerung sind die tierischen Nebenprodukte in einer Weise thermisch zu behandeln bzw. zu erhitzen, die gewährleistet, dass mindestens 125 min eine Kerntemperatur von über 100 °C, mindestens 120 min eine Kerntemperatur von über 110 °C und mindestens 50 min eine Kerntemperatur von über 120 °C erreicht wird, wobei die tierischen Nebenprodukte so erhitzt werden müssen, dass die Zeit-/Temperaturanforderungen gleichzeitig erfüllt sind. Diese thermische Behandlung erfolgt im Chargenbetrieb.

Anschließend an die Sterilisierung kann die Weiterverarbeitung der sterilisierten tierischen Nebenprodukte, zum Beispiel zu Biogas oder Heizöl, erfolgen.

Die Standardverarbeitungsmethoden zur Sterilisierung der tierischen Nebenprodukte erfordern einen hohen Energieeinsatz, da die Sterilisierungstemperaturen über einen relativ langen Zeitraum, im Fall der Verarbeitungsmethode 2 nach Verordnung (EU) Nr. 142/2011 über insgesamt zirka fünf Stunden, aufrechterhalten werden müssen.

Es ist daher Aufgabe der Erfindung ein energieeffizientes Verfahren zur thermischen Behandlung von tierischen Nebenprodukten, insbesondere solche, die unter die Kategorie 3 gemäß Verordnung (EG) Nr. 1069/2009 fallen, sowie eine Sterilisierungsvorrichtung bereitzustellen, die gleichzeitig neben einer emissionsfreien Sterilisierung der tierischen Nebenprodukte die Gewinnung von Wertstoffen, zum Beispiel Biokraftstoffen und/oder Düngemitteln, ermöglichen.

Diese Aufgabe wird durch das Verfahren zur thermischen Behandlung tierischer Nebenprodukte mit den kennzeichnenden Merkmalen nach Anspruch 1 gelöst; zweckmäßige Weiterbildungen der Erfindung sind in den Ansprüchen 2 bis 4 beschrieben.

Die zur Durchführung des erfindungsgemäßen Verfahrens einsetzbare Sterilisierungsvorrichtung umfasst einen Sterilisator zur thermischen Behandlung der zu verarbeitenden tierischen Nebenprodukte. Der Sterilisator weist eine Heizkammer sowie eine innerhalb der Heizkammer angeordnete, gasdicht verschließbare Reaktorkammer auf, die zur Aufnahme der tierischen Nebenprodukte dient. Die Reaktorkammer ist baulich von der Heizkammer getrennt; sie ist beispielsweise durch eine verschließbare Öffnung der Heizkammer in diese ein- oder ausgefahrbar.

Innerhalb der Heizkammer sind ein oder mehrere, vorzugsweise elektrisch betriebene Heizelemente angebracht. Die Verteilung der Heizelemente ebenso wie die geometrische Gestaltung der Heiz- und Reaktorkammer sind so ausgeführt, dass eine möglichst effiziente Beheizung stattfindet.

Die Reaktorkammer weist eine Reaktorkammerdecke und einen Reaktorkammerboden auf. Im Bereich der Reaktorkammerdecke befindet sich eine Gasabführöffnung durch die während der thermischen Behandlung der tierischen Nebenprodukte entstehende gasförmige Produkte aus der Reaktorkammer in eine angeschlossene Gasabführleitung ausleitbar sind.

Bei der in mehreren Behandlungsstufen durchgeführten thermischen Behandlung der tierischen Nebenprodukte entstehen gasförmige Produkte; es handelt sich hierbei neben Wasserdampf insbesondere um Kohlenwasserstoffe sowie andere organische Verbindungen.

Die Gasabführleitung besitzt im Bereich ihres Anschlusses an die Reaktorkammer, d. h. im Bereich der Gasabführöffnung, ein Gasabführleitungsventil, welches zum Beispiel als Magnetventil ausgeführt ist. Das Gasabführleitungsventil ist bei Beginn der thermischen Behandlung geschlossen und wird zu einem geeigneten Behandlungszeitpunkt geöffnet.

Mittels einer im Bereich des Reaktorkammerbodens angeordneten Flüssigkeitsabführleitung können nach Abschluss der Sterilisierung verbliebene Flüssigprodukte abgeführt werden. Die Flüssigkeitsabführleitung ist mit einem Flüssigkeitsabführleitungsventil versehen, das während der Sterilisierung geschlossen ist und frühestens nach einer vorgegebenen Mindeststerilisierungsdauer zum Ablassen der Flüssigprodukte geöffnet wird. Am Reaktorkammerboden können auch mehrere Flüssigkeitsabführleitungen mit jeweils einem Flüssigkeitsabführleitungsventil angebracht sein.

Die Gasabführleitung ist an einen Kondensator angeschlossen, in dem die aus der Reaktorkammer über die Gasabführleitung in den Kondensator geleiteten gasförmigen Produkte abgekühlt werden und zumindest teilweise kondensieren. Die sich im Kondensator bildenden Flüssigprodukte können als Wertstoffe weiter verwendet werden. Sie werden in einem geschlossenen System in ein oder mehrere Sammelbehälter geleitet. Bei den Flüssigprodukten handelt es sich zum Beispiel um destilliertes Wasser oder um Öle.

Weiterhin weist die Sterilisierungsvorrichtung zur Messung einer Gasabfuhrtemperatur einen Gasabfuhrtemperatursensor auf, der am Austritt der Gasabführleitung (am Übergang zum Kondensator) angeordnet ist. Der Gasabfuhrtemperatursensor ist elektrisch mit einer Steuerungs-und Regelungsvorrichtung verbunden.

Sofern gasförmige Produkte über die Gasabführleitung zum Kondensator abgeführt werden, registriert der Gasabfuhrtemperatursensor das Vorhandensein der gasförmigen Produkte aufgrund der (erhöhten) Temperatur der vorbeiströmenden Gase. Entstehen in der Reaktorkammer dagegen keine gasförmigen Produkte bzw. ist die Gasbildung bereits abgeschlossen, kommt der Gasstrom in der Gasabführleitung zum Erliegen. In der Folge wird am Gasabfuhrtemperatursensor eine niedrigere Gasabfuhrtemperatur registriert als bei anliegendem Gasstrom.

Erfindungsgemäß wird die thermische Behandlung der tierischen Nebenprodukte nach deren Zerkleinerung zu Partikeln mit einer vorgegebenen Kantenlänge mit einem Temperatur-Zeit-Regime in mehreren aufeinanderfolgenden Behandlungsstufen mit einer ansteigenden Reaktortemperatur bis zum Erreichen einer Maximalbehandlungstemperatur durchgeführt, wobei die Reaktortemperatur der jeweiligen Behandlungsstufe als eine vorgegebene Haltetemperatur über eine vorgegebene Haltedauer konstant gehalten wird. Das stufenweise Erhitzen der Reaktorkammer erfolgt mittels der Heizelemente der Heizkammer; nach Beendigung einer spezifischen Behandlungsstufe wird die Reaktortemperatur erhöht bis die Haltetemperatur der folgenden Behandlungsstufe erreicht ist.

Die Reaktor- bzw. Haltetemperatur der ersten Behandlungsstufe ist so eingestellt, dass die Kerntemperatur der Partikel der tierischen Nebenprodukte 110 °C überschreitet. Die Haltedauer der ersten Behandlungsstufe beträgt 125 min.

Die thermische Behandlung in den weiteren Behandlungsstufen mit stufenweise erhöhter Haltetemperatur wird mindestens bis zum Erreichen der vorgegebenen Mindeststerilisierungsdauer durchgeführt.

Das Gasabführleitungsventil und das Flüssigkeitsabführleitungsventil sind zu Beginn der thermischen Behandlung geschlossen. Erfindungsgemäß wird die Gasabführleitung zum Ausleiten der in der Reaktorkammer gebildeten gasförmigen Produkte bei Erreichen einer vorgegebenen Reaktortemperatur geöffnet. Das Öffnen der Flüssigkeitsabführleitung zum Ausleiten der in der Reaktorkammer gebildeten Flüssigprodukte erfolgt bei Erreichen der Mindeststerilisierungsdauer.

Die thermische Behandlung erfolgt mit der Mindeststerilisierungsdauer von 295 min.

Die Maximalbehandlungstemperatur beträgt 550 °C; diese Maximalbehandlungstemperatur ist gleichzeitig die Haltetemperatur der letzten Behandlungsstufe.

Die Zerkleinerung der tierischen Nebenprodukte vor deren thermischer Behandlung kann beispielsweise mittels eines geeigneten Brechers oder Häckslers durchgeführt werden. Die Portionen bzw. Partikel weisen danach eine vorgegebene maximale Kantenlänge auf. Zur Einhaltung der Verordnung (EU) Nr. 142/2011 ist eine Kantenlänge der Partikel von höchstens 150 mm vorzusehen. Vorzugsweise wird die auf die Zerkleinerung folgende thermische Behandlung mit Partikeln mit einer Kantenlänge von maximal 50 mm durchgeführt.

Die Einstellung der Kerntemperatur, d. h. der Temperatur im Kern eines Partikels der tierischen Nebenprodukte, erfolgt über die Einstellung einer entsprechenden Reaktortemperatur durch Ansteuerung der Heizelemente mittels der Steuerungs-und Regelungsvorrichtung. Die Reaktortemperatur wird mittels eines Reaktortemperatursensors bestimmt, der vorzugsweise im Bereich der Gasabführöffnung bzw. am Eintritt zur Gasabführleitung angeordnet ist. Der Reaktortemperatursensor ist elektrisch mit der Steuerungs-und Regelungsvorrichtung verbunden.

Ein Vorteil der Erfindung ist, dass mittels der thermischen Behandlung energieeffizient Wertstoffe direkt aus sterilisierten tierischen Nebenprodukten gewonnen werden; ein Umladen in andere Verwertungsanlagen entfällt.

Da die im thermischen Behandlungsverfahren einbegriffene thermische Sterilisierung deutlich über die Standardverarbeitungsmethoden der europäischen Union hinausgeht, erfüllt bzw. übererfüllt das Verfahren diese Hygienevorschriften. Die produzierten Wertstoffe sind im Hinblick auf die implizite Einhaltung der Hygienemaßnahmen folglich unbedenklich weiterverwendbar.

Im Wesentlichen entsteht auf der ersten Behandlungsstufe Wasserdampf aus dem Wassergehalt der tierischen Nebenprodukte. Während der Anfangsphase der thermischen Behandlung, d. h. bis zum Öffnen des Gasausführleitungsventils, unterstützt der in der gasdicht verschlossenen Reaktorkammer unter erhöhtem Druck stehende Wasserdampf die Sterilisierung der tierischen Nebenprodukte. Das erfindungsgemäße Verfahren integriert insofern Aspekte der Druckwasserdampfsterilisierung, wie sie bei alternativen Sterilisierungsmethoden, zum Beispiel der Verarbeitungsmethode 1 gemäß Verordnung (EU) Nr. 142/2011 vorgesehen sind. Die Drucküberwachung kann mittels eines in der Reaktionskammer angeordneten Drucksensors erfolgen.

Da die Sterilisierungsvorrichtung gasdicht ausgeführt ist, wobei alle Produkte während der thermischen Behandlung entweder in entsprechenden Sammelbehältern aufgefangen oder aber in der Reaktorkammer verbleiben, ist die thermische Behandlung der tierischen Nebenprodukte frei von Emissionen, d. h., es entstehen keine Abwässer oder Abgase, die in die Umwelt abgegeben werden.

Bei den gewonnenen Wertstoffen handelt es sich neben destilliertem Wasser um Kohlenwasserstoffe und um andere organische Substanzen, die zum Beispiel als Biokraftstoffe zur Energiegewinnung oder als Vorprodukte zur Weiterverarbeitung in der chemischen Industrie verwendbar sind.

Bei Behandlung unter Luftabschluss und ausreichend hoher Reaktortemperatur enthalten die in der Reaktorkammer verbleibenden, aus den tierischen Nebenprodukten hervorgegangenen festen Reststoffe vorrangig Kohlenstoff und sind reich an Phosphaten. Diese Reststoffe können, ggf. nach geeigneter Verarbeitung, in der Agrarwirtschaft zur Bodendüngung eingesetzt werden.

Die Wertstoffgewinnung erfolgt sowohl aus den gasförmigen Produkten als auch aus den Flüssigprodukten, die direkt aus der Reaktorkammer über die Flüssigkeitsabführleitung entnommen werden. Dieses direkte Ableiten der Flüssigprodukte aus der Reaktorkammer reduziert den Energieeinsatz bei der thermischen Behandlung der tierischen Nebenprodukte, da die Flüssigprodukte dem energieintensiven Verdampfungsprozess innerhalb der Reaktorkammer entzogen werden. Die Flüssigprodukte können entweder direkt als Wertstoffe verwendet oder in einem anschließenden Trennungsprozess mit angepassten Vorrichtungen stofflich aufgetrennt werden, zum Beispiel durch Zentrifugieren, Abscheiden, Extrahieren oder Destillieren.

Die Entnahme der Flüssigprodukte kann außerdem separat nach vorgegebenen Zeitpunkten erfolgen, zum Beispiel am Ende einer jeweiligen Behandlungsstufe (nach Erreichen der Mindeststerilisierungsdauer). Somit können unterschiedliche Flüssigprodukte, die in den unterschiedlichen Behandlungsstufen entstehen direkt und ohne zusätzliche Folgeschritte stofflich voneinander getrennt werden.

Die Reaktortemperatur der ersten Behandlungsstufe beträgt vorzugsweise 210 °C. Bei Einstellung dieser Reaktortemperatur ist das Überschreiten der Kerntemperatur der als Partikel vorliegenden tierischen Nebenprodukte von 110 °C sichergestellt.

Eine geeignete Reaktortemperatur, nach deren Erreichen das Gasabführleitungsventil geöffnet wird, ist 280 °C. Das Öffnen der Gasabführleitung bei dieser Temperatur hat den besonderen Vorteil, dass die Wasserdampfbildung in der Reaktorkammer weitgehend abgeschlossen ist. Somit werden beim Öffnen der Gasabführleitung vorrangig wasserhaltige gasförmige Produkte aus der Reaktorkammer ausgeleitet, die von den weiteren gasförmigen Produkten bei Behandlungsstufen mit höherer Temperatur separat gesammelt werden können.

In einer Ausgestaltung des Verfahrens erfolgt die Erhöhung der Reaktortemperatur bis zur Maximalbehandlungstemperatur in Haltetemperaturstufen von 50 K.

In einer anderen Ausgestaltung des Verfahrens werden die Haltetemperatur und die Haltedauer der jeweiligen Behandlungsstufe dynamisch angepasst:
Hierbei wird das Verfahren zur thermischen Behandlung der tierischen Nebenprodukte so ausgeführt bzw. gesteuert und/oder geregelt, dass in Abhängigkeit von Änderungen der Gasabfuhrtemperatur die Haltetemperatur und/oder die Haltedauer auf einer spezifischen Behandlungsstufe individuell eingestellt werden.

So wird zum Beispiel die Haltedauer einer Behandlungsstufe bei Detektion eines signifikanten Abfalls der Gasabfuhrtemperatur beendet, wobei im Anschluss an die Beendigung der Haltedauer der Behandlungsstufe auf die folgende Behandlungsstufe mit einer höheren Haltetemperatur übergegangen oder bei Erreichen der Maximalbehandlungstemperatur die thermische Behandlung beendet wird.

Ebenso kann die Haltetemperatur einer bestimmten Behandlungsstufe bzw. deren Haltedauerbeginn aufgrund eines Anstiegs der Gasabfuhrtemperatur festgelegt sein. Nach Beendigung der Haltedauer auf einer vorangehenden Behandlungsstufe wird die Reaktorkammer aufgeheizt bis am Gasabfuhrtemperatursensor einer signifikanten Erhöhung der Gasabfuhrtemperatur registriert und folglich indirekt der Beginn der Gasbildung in der Reaktorkammer erfasst werden. Die nun vorliegende Reaktortemperatur wird als die Haltetemperatur der Behandlungsstufe festgesetzt.

In diesen Ausgestaltungen zur dynamischen Anpassung der Haltetemperatur und Haltezeit kann die Reaktortemperatur als Vergleichs- bzw. Basistemperatur dienen, zum Beispiel indem der Anstieg oder der Abfall der Differenz aus Gasabfuhrtemperatur und Reaktortemperatur als Indikator zur Steuerung der Haltetemperatur und/oder Haltedauer genutzt wird.

Da die spezifischen gasförmigen Produkte, die bei der thermischen Behandlung der tierischen Nebenprodukte entstehen, unterschiedliche Verdampfungstemperaturen aufweisen, können die gasförmigen Produkte im Kondensator durch die Wahl der Haltetemperaturen und der Haltedauern sequentiell erzeugt werden, sodass - im Sinne einer fraktionierten Destillation - eine Stofftrennung der entstehenden Produkte erfolgt. Diese Produkte besitzen eine vergleichsweise hohe Reinheit und können als Wertstoffe ihren ggf. unterschiedlichen Verwendungsmöglichkeiten zugeführt werden, zum Beispiel als Biokraftstoffe oder als Ausgangsprodukte für die chemische Industrie. Die dynamische Anpassung der Haltetemperaturen und der Haltedauern ermöglicht eine besonders energieeffiziente thermische Behandlung der tierischen Nebenprodukte.

Vorzugsweise erfolgt die thermische Behandlung der tierischen Nebenprodukte unter Luftabschluss. Hierdurch wird die Oxidation der entstehenden Wertstoffe vermieden.

Alternativ kann eine dosierte Zugabe von Sauerstoff bzw. Luft erfolgen, um beispielsweise die thermische Behandlung durch die während der Oxidation der tierischen Nebenprodukte entstehende Reaktionswärme zu unterstützen und damit den Energieeinsatz zur Beheizung der Reaktorkammer zu reduzieren.

Da die thermische Behandlung der tierischen Nebenprodukte in der gasdicht geschlossenen Reaktorkammer stattfindet, kann die thermische Behandlung durch Gas- oder Dampfzugabe bei einem vorgegebenen Überdruck durchgeführt werden. Während die Mindeststerilisierungsdauer der thermischen Behandlung bei normalen Atmosphärendruck vorzugsweise 295 min beträgt, kann die Mindeststerilisierungsdauer der bei höheren Drücken durchgeführten thermischen Behandlung reduziert werden.

In der Reaktorkammer können ein oder mehrere Reaktoreinsätze angeordnet sein, die bei bestimmungsgemäßer Benutzung die tierischen Nebenprodukte tragen. Der jeweilige Reaktoreinsatz umfasst wenigstens einen perforierten Zwischenboden; er ist so in der Reaktorkammer angebracht, dass der perforierte Zwischenboden einen Abstand zum Reaktorkammerboden aufweist. Dies ermöglicht, dass die Flüssigprodukte, die sich bei der thermischen Behandlung der tierischen Nebenprodukte in der Reaktorkammer bilden, durch den perforierten Zwischenboden sickern und sich am Reaktorkammerboden sammeln.

Der perforierte Zwischenboden kann zum Beispiel ein Gitterrost oder einen Platte aus offenporigem, hitzebeständigem Material, zum Beispiel einem Schaumwerkstoff, sein.

Die Reaktorkammer kann einen oder mehrere Gasumleitungskanäle aufweisen, wobei jeder der Gasumleitungskanäle von einer Position zwischen dem Reaktorkammerboden und dem perforierten Zwischenboden des Reaktoreinsatzes aus in Richtung der Reaktorkammerdecke verläuft. Flüssigprodukte, die sich am Reaktorkammerboden sammeln, können - soweit sie nicht über die Flüssigkeitsabführleitung entnommen werden - bei Erreichen ihrer Siedetemperatur verdampfen; die entstehenden gasförmigen Produkte werden über die Gasumleitungskanäle zur Gasabführöffnung geführt. Die gasförmigen Produkte gelangen über die Gasumleitungskanäle ungehindert vom Reaktorkammerboden zur Gasabführöffnung, ohne durch die auf den Reaktoreinsätzen lagernden tierischen Nebenprodukte hindurchzuströmen.

In einer Ausgestaltung weist die Heizkammer mehrere Heizelemente auf, die in verschiedenen Heizsegmenten innerhalb der Heizkammer angeordnet sind, wobei die Heizelemente individuell mittels der Steuerungs- und Regelungsvorrichtung ansteuerbar sind. Die Heizsegmente bilden verschiedene Heizzonen im Sterilisator aus, deren Temperatur mittels separater, jeweils elektrisch mit der Steuerungs- und Regelungsvorrichtung verbundener Heizzonentemperatursensoren überwachbar ist. Die Beheizung der Heizkammer kann durch Einstellung unterschiedlicher Heizzonentemperaturen an die unterschiedliche Masseverteilung innerhalb der Heizkammer angepasst werden, wodurch die Temperatur in der Heizkammer räumlich homogenisierbar ist. Hierdurch erfolgt die Verdampfung spezifischer Produkte innerhalb der Reaktorkammer zu einheitlichen Zeitpunkten.

In einer Ausgestaltung sind die bzw. ein Teil der Heizelemente selektiv transformierende Infrarotstrahlungsheizelemente. Diese Infrarotstrahlungsheizelemente bestehen aus Werkstoffen oder sind mit Werkstoffen beschichtet, die ein eingeschränktes Emissionsspektrum aufweisen, d. h. nach Transformation des Strahlungsspektrums eines normalen Infrarotstrahlers selektiv in einem bestimmten Wellenlängenbereich strahlen. Dadurch können spezifische Verbindungen verschiedener Moleküle der in der Reaktorkammer befindlichen Stoffe individuell thermisch angeregt werden, d. h., bestimmte Stoffgruppen können gezielt erhitzt werden. So ist es beispielsweise möglich, durch Auswahl geeigneter Infrarotstrahler Stoffe, die vorwiegend O-H-Gruppen aufweisen, zum Beispiel Wasser, oder Stoffe die vorwiegend C-H-Gruppen aufweisen, zum Beispiel Kohlenwassersstoffe, selektiv anzuregen und deren Verflüssigung bzw. die daran anschließende Verdampfung selektiv zu fördern.

Es können auch mehrere Infrarotstrahlungsheizelemente benutzt werden, die in unterschiedlichen Strahlungsspektren wirksam sind und zu unterschiedlichen Zeiten mittels der Steuerungs- und Regelungsvorrichtung angesteuert werden.

Die selektive Anregung mittels der selektiv transformierenden Infrarotstrahlungsheizelemente unterstützt die Entstehung unterschiedlicher gasförmiger Produkte und Flüssigprodukte zu unterschiedlichen Zeitpunkten bzw. während unterschiedlicher Behandlungsstufen. So wird neben dem fraktionieren Auffangen der gasförmigen Produkte aus dem Kondensator auch die Trennung der Flüssigprodukte durch sequentielle Entnahme aus der Flüssigkeitsabführleitung begünstigt.

Gemäß einer weiteren Ausgestaltung der Sterilisationsvorrichtung ist der Kondensator mit einem Gasreiniger verbunden, in den die nicht kondensierten Restgase eingeleitet werden. Der Gasreiniger ist nach dem Prinzip der Gaswaschflasche aufgebaut und mit einer Reinigungsflüssigkeit, vorzugsweise Wasser oder eine wässrige Lösung, gefüllt. Der Gasreiniger kann mit einem Leichtflüssigkeitsabscheider versehen sein.

Beim Durchleiten der Restgase aus dem Kondensator werden in der Reinigungsflüssigkeit lösliche Bestandteile gelöst. Organische Bestandteile der Restgase verflüssigen durch den Kontakt in der Reinigungsflüssigkeit und setzen sich zum Beispiel als Ölfilm an der Flüssigkeitsoberfläche ab und können mittels des Leichtflüssigkeitsabscheiders abgetrennt werden.

Die Erfindung ist nachfolgend anhand eines Ausführungsbeispiels und mit Bezug auf die schematischen Zeichnungen näher erläutert. Dazu zeigen:
- Fig. 1:: die Sterilisierungsvorrichtung in schematischer Schnittdarstellung, und
- Fig. 2:: die Sterilisierungsvorrichtung in perspektivischer Ansicht.

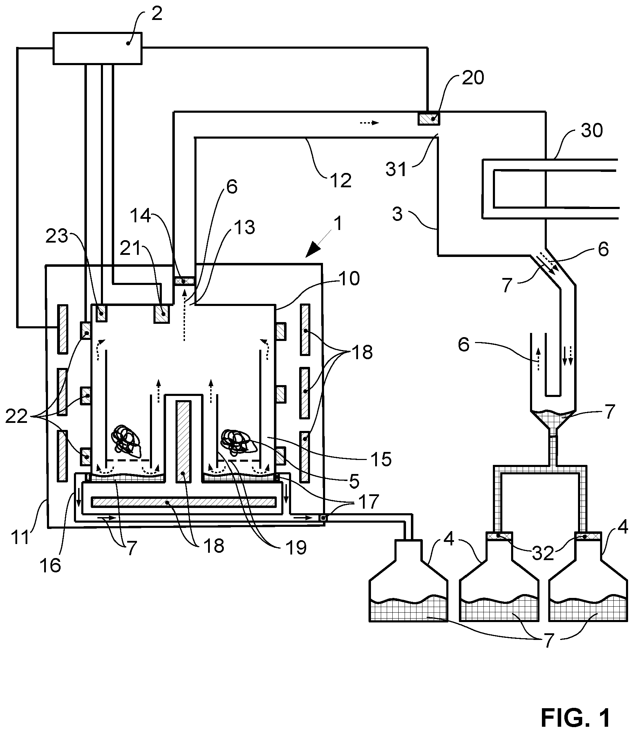

Der Sterilisator 1 der Sterilisierungsvorrichtung nach der Fig. 1 umfasst die Heizkammer 11 und die innerhalb der Heizkammer 11 angeordnete Reaktorkammer 10.

Die Beheizung erfolgt mittels der elektrischen Heizelemente 18, die in drei übereinanderliegenden Heizsegmenten bzw. Heizzonen angeordnet sind. Die Heizelemente 18 wie auch die zur Temperaturüberwachung dienenden Heizzonentemperatursensoren 22 sind mit der Steuerungs- und Regelungsvorrichtung 2 elektrisch zur Leistungssteuerung der einzelnen Heizelemente 18 verbunden.

Im Reaktor befinden sich die Reaktoreinsätze 19, die über jeweils einen als Rost ausgebildeten perforierten Zwischenboden verfügen. Die Zwischenböden tragen die tierischen Nebenprodukte 5 während der thermischen Behandlung.

Aus den tierischen Nebenprodukten 5 während der thermischen Behandlung austretende Flüssigprodukte 7 sammeln sich am Reaktorkammerboden, an dem eine Flüssigkeitsabführleitung 16 angebracht ist, über die die Flüssigprodukte 7 ausleitbar sind. Die Flüssigkeitsabführleitung 16 besitzt zwei Flüssigkeitsabführleitungsventile 17 am direkten Anschluss an die Reaktorkammer 10 sowie ein Flüssigkeitsabführleitungsventil 17 am Ausgang aus der Heizkammer 11. Das Flüssigkeitsabführleitungsventil 17 am Ausgang aus der Heizkammer 11 wird erst nach Erreichen der Mindeststerilisierungsdauer geöffnet.

Die Ausleitung der Flüssigprodukte 7 erfolgt in den mit der Flüssigkeitsabführleitung 16 verbundenen Sammelbehälter 4.

Zudem sind in der Reaktorkammer 10 mehrere Gasumleitungskanäle 15 ausgebildet, über die die in der Reaktorkammer 10 entstehenden gasförmigen Produkte 6 problemlos vom Reaktorkammerboden zur Reaktorkammerdecke gelangen.

Die gasförmigen Produkte 6 steigen während der thermischen Behandlung zur Reaktorkammerdecke auf, gelangen nach dem Öffnen des Gasabführleitungsventils 14 durch die Gasabführöffnung 13 in die Gasabführleitung 12 und werden über diese in den Kondensator 3 geleitet.

Der Reaktortemperatursensor 21 befindet sich im Bereich der Gasabführöffnung 13; der Gasabfuhrtemperatursensor 20 ist am Austritt der Gasabführleitung 12 (im Bereich der Gaszuführöffnung 31 des Kondensators 3) angeordnet. Der Drucksensor 23 ist ebenfalls innerhalb der Reaktorkammer 10 angeordnet. Die Sensoren 21, 22, 23 sind mit der Steuerungs- und Regelungsvorrichtung 2 elektrisch verbunden.

Im Kondensator 3 werden die gasförmigen Produkte 6 zu Flüssigprodukten 7 kondensiert. Die Abkühlung der gasförmigen Produkte 6 erfolgt mittels des Kühlwasserkreislaufs 30. Die entstehenden Flüssigprodukte 7 gelangen in verschiedene Sammelbehälter 4, deren Flüssigkeitseinlass 32 in Abhängigkeit der Behandlungsführung geöffnet oder geschlossen wird, um vorfraktionierte Flüssigprodukte 7 zu erhalten.

Die in den Sammelbehältern 4 (zumeist als Öl-Wasser-Gemische) vorliegenden Flüssigprodukte 7 werden nachfolgend mittels einer Zentrifuge getrennt. Der auszentrifugierte Wasseranteil wird anschließend nochmals einer fraktionierten Destillation in einer Destillieranlage unterzogen, um darin enthaltene organischen Restbestandteile zu entfernen.

Die Öle werden beispielsweise einem Blockheizkraftwerk als Heizöl zugeführt, mittels dem u. a. der Strom für den Betrieb der Sterilisierungsvorrichtung und die Wärme zum Betrieb der Destillieranlage bereitgestellt werden.

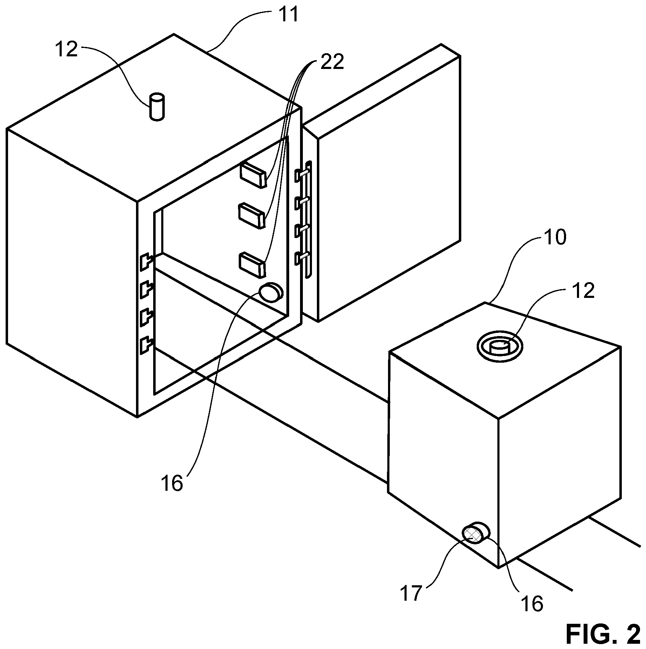

Die Reaktorkammer 10 - siehe hierzu Fig. 2 - ist in die Heizkammer 11 ein- bzw. ausfahrbar. Die Gasabführleitung 12 verfügt über korrespondierende Anschlüsse im Deckenbereich der Heizkammer 11 und der Reaktorkammer 10. Die Reaktorkammer 10 und die Heizkammer 11 sind auf eine Maximalbelastungstemperatur von ca. 900 °C ausgelegt.

Des Weiteren zeigt die Fig. 2 die Flüssigkeitsabführleitung 16 mit einem der reaktorkammerseitigen Flüssigkeitsabführleitungsventile 16 sowie die Heizzonentemperatursensoren 22.

### Liste der verwendeten Bezugszeichen

- 1: Sterilisator
- 2: Steuerungs- und Regelungsvorrichtung
- 3: Kondensator
- 4: Sammelbehälter
- 5: tierische Nebenprodukte
- 6: gasförmige Produkte
- 7: Flüssigprodukte
- 10: Reaktorkammer
- 11: Heizkammer
- 12: Gasabführleitung
- 13: Gasabführöffnung
- 14: Gasabführleitungsventil
- 15: Gasumleitungskanal
- 16: Flüssigkeitsabführleitung
- 17: Flüssigkeitsabführleitungsventil
- 18: Heizelement
- 19: Reaktoreinsatz
- 20: Gasabfuhrtemperatursensor
- 21: Reaktortemperatursensor
- 22: Heizzonentemperatursensor
- 23: Drucksensor
- 30: Kühlwasserkreis
- 31: Gaszuführöffnung
- 32: Flüssigkeitseinlass

## Patentansprüche

1. Verfahren zur thermischen Behandlung tierischer Nebenprodukte (5), bestehend aus Partikeln mit einer vorgegebenen Kantenlänge, wobei die tierischen Nebenprodukte (5) in einer gasdichten Reaktorkammer (10) mit einer angeschlossenen verschließbaren Gasabführleitung (12) und einer angeschlossenen verschließbaren Flüssigkeitsabführleitung (16), in mehreren aufeinanderfolgenden Behandlungsstufen mit einer ansteigenden Reaktortemperatur bis zum Erreichen einer Maximalbehandlungstemperatur erhitzt werden, wobei die Reaktortemperatur der jeweiligen Behandlungsstufe als eine vorgegebene Haltetemperatur über eine vorgegebene Haltedauer konstant gehalten wird, **dadurch gekennzeichnet, dass**
- die Gasabführleitung (12) und die Flüssigkeitsabführleitung (16) bei Beginn der thermischen Behandlung geschlossen sind,
- die Haltedauer der ersten Behandlungsstufe 125 min beträgt und die Haltetemperatur der ersten Behandlungsstufe so eingestellt ist, dass die Kerntemperatur der Partikel aus den tierischen Nebenprodukten (5) mehr als 110 °C beträgt, und
- die thermische Behandlung in weiteren Behandlungsstufen mit stufenweise erhöhter Haltetemperatur mindestens bis zum Erreichen einer vorgegebenen Mindeststerilisierungsdauer durchgeführt wird,
- die Mindeststerilisierungsdauer 295 min beträgt, und
- die Maximalbehandlungstemperatur 550 °C beträgt, wobei die Maximalbehandlungstemperatur gleichzeitig die Haltetemperatur der letzten Behandlungsstufe ist,
- wobei die Gasabführleitung (12) zum Ausleiten in der Reaktorkammer (10) gebildeter gasförmiger Produkte (6) bei Erreichen einer vorgegebenen Reaktortemperatur geöffnet wird, und
- wobei die Flüssigkeitsabführleitung (16) zum Ausleiten in der Reaktorkammer (10) gebildeter Flüssigprodukte (7) bei Erreichen der Mindeststerilisierungsdauer geöffnet wird.

2. Verfahren zur thermischen Behandlung tierischer Nebenprodukte (5) nach Anspruch 1, **dadurch gekennzeichnet, dass** die Haltetemperatur der ersten Behandlungsstufe 210 °C beträgt.

3. Verfahren zur thermischen Behandlung tierischer Nebenprodukte (5) nach Anspruch 1 oder 2, **dadurch gekennzeichnet, dass** die Gasabführleitung (12) bei Erreichen einer Reaktortemperatur von 280 °C geöffnet wird.

4. Verfahren zur thermischen Behandlung tierischer Nebenprodukte (5) nach einem der Ansprüche 1 bis 3, wobei nach dem Öffnen der Gasabführleitung (12) am Austritt der Gasabführleitung (12) eine Gasabfuhrtemperatur gemessen wird, **dadurch gekennzeichnet, dass**
- die Haltedauer einer Behandlungsstufe jeweils dann beendet wird, wenn die Gasabfuhrtemperatur während des Haltens der Reaktortemperatur auf der jeweiligen Behandlungsstufe signifikant abfällt, und/oder
- die Reaktortemperatur als die Haltetemperatur einer Behandlungsstufe festgelegt wird, sobald während des Aufheizens nach Beendigung der vorangehenden Behandlungsstufe die Gasabfuhrtemperatur signifikant ansteigt.

## Claims

1. Method for thermal treatment of animal byproducts (5), consisting of particles with a specified edge length, wherein the animal byproducts (5) being heated in a gas-tight reactor chamber (10) with a connected lockable gas removal line (12) and an connected lockable liquid removal line (16) in several successive treatment stages with an increasing reactor temperature until a maximum treatment temperature is reached, wherein the reactor temperature of the respective treatment stage is kept constant as a predetermined holding temperature over a predetermined holding period, **characterized in that**
- the gas removal line (12) and the liquid removal line (16) are closed at the beginning of the thermal treatment
- the holding time of the first treatment stage is 125 min and the holding temperature of the first treatment stage is set such that the core temperature of the particles from the animal byproducts (5) is more than 110 °C, and
- the thermal treatment is carried out in further treatment stages with a gradually increasing holding temperature at least until a specified minimum sterilization time has been reached,
- the minimum sterilization time is 295 minutes
- the maximum treatment temperature is 550 °C, wherein the maximum treatment temperature is also the holding temperature of the last treatment stage,
- wherein the gas removal line (12) for discharging gaseous products (6) formed in the reactor chamber (10) is opened when a predetermined reactor temperature is reached, and
- wherein the liquid removal line (16) for discharging liquid products (7) formed in the reactor chamber (10) is opened when the minimum sterilization time is reached.

2. Method for thermal treatment of animal byproducts (5) according to claim 1, **characterized in that** the holding temperature of the first treatment stage is 210 °C.

3. Method for thermal treatment of animal byproducts (5) according to claim 1 or 2, **characterized in that** the gas removal line (12) is opened when a reactor temperature of 280 °C is reached.

4. Method for thermal treatment of animal byproducts (5) according to any one of claims 1 to 3, a gas removal temperature being measured at the outlet of the gas removal line (12) after the gas removal line (12) has been opened, **characterized in that**
- the holding period of a treatment stage is ended when the gas removal temperature drops significantly while the reactor temperature is being held at the respective treatment stage, and/or
- the reactor temperature is set as the holding temperature of a treatment stage as soon as the gas removal temperature rises significantly during heating after the completion of the previous treatment stage.

## Revendications

1. Procédé de traitement thermique de sous-produits d'origine animale (5), constitués de particules ayant une longueur de bord prédéterminée, les sous-produits d'origine animale (5) étant traités dans une chambre de réacteur (10) étanche aux gaz, avec un conduit d'évacuation de gaz (12) raccordé et pouvant être fermé et un conduit d'évacuation de liquide (16) raccordé et pouvant être fermé, sont chauffés dans plusieurs phases de traitement successives avec une température de réacteur croissante jusqu'à atteindre une température de traitement maximale, la température de réacteur de la phase de traitement respective étant maintenue constante en tant que température de séjour prédéfinie pendant une durée de séjour prédéfinie, **caractérisé en ce que** - le conduit d'évacuation de gaz (12) et le conduit d'évacuation de liquide (16) sont fermés au début du traitement thermique,
- la durée de séjour de la première phase de traitement est de 125 min et la température de séjour de la première phase de traitement est réglée de telle sorte que la température centrale des particules issus des sous-produits d'origine animale (5) est supérieure à 110 °C, et
- le traitement thermique est effectué dans d'autres phases de traitement avec une température de séjour graduellement augmentée au moins jusqu'à ce qu'une durée minimale de stérilisation prédéfinie soit atteinte,
- la durée minimale de stérilisation est de 295 min, et
- la température maximale de traitement est de 550 °C, la température maximale de traitement étant dans le même temps la température de séjour de la dernière phase de traitement,
- le conduit d'évacuation de gaz (12) étant ouvert pour évacuer les produits gazeux (6) formés dans la chambre de réacteur (10) alors qu'une température de réacteur prédéfinie est atteinte, et
- dans lequel le conduit d'évacuation de liquide (16) est ouvert pour évacuer des produits liquides (7) formés dans la chambre de réacteur (10) alors que la durée de stérilisation minimale est atteinte.

2. Procédé de traitement thermique de sous-produits d'origine animale (5) selon la revendication 1, **caractérisé en ce que** la température de séjour de la première phase de traitement est de 210 °C.

3. Procédé de traitement thermique de sous-produits d'origine animale (5) selon la revendication 1 ou 2, **caractérisé en ce que** le conduit d'évacuation de gaz (12) est fermé alors qu'une température de réacteur de 280 °C est atteinte.

4. Procédé de traitement thermique de sous-produits d'origine animale (5) selon l'une des revendications 1 à 3, dans lequel, après l'ouverture du conduit d'évacuation de gaz (12), une température d'évacuation de gaz est mesurée à la sortie du conduit d'évacuation de gaz (12), **caractérisé en ce que**
- la durée de séjour d'une phase de traitement se termine à chaque fois que la température d'évacuation des gaz chute de manière significative pendant le séjour de la température du réacteur à la phase de traitement correspondante, et/ou
- la température du réacteur est définie comme la température de séjour d'une phase de traitement, si bien que la température d'évacuation des gaz augmente de manière significative pendant le chauffage après la fin de la phase de traitement précédente.
